# FASCICULE DE BREVET EUROPEEN

(11) **EP 3 576 971 B1**
(45) Date de publication et mention de la délivrance du brevet: **08.09.2021**
(21) Numéro de dépôt: 18703065.5
(22) Date de dépôt: 18.01.2018
(51) Int. Cl.: B60K 11/08

(54) **DISPOSITIF DE RÉGULATION D'UN FLUX D'AIR CIRCULANT SOUS LE CAPOT D'UN VÉHICULE**
REGELEINRICHTUNG EINES LUFTSTROMS, DER UNTER DER HAUBE EINES FAHRZEUGS STRÖMT
REGULATING DEVICE OF AN AIR FLOW STREAMING UNDER THE HOOD OF A VEHICLE

(30) Priorité: 02.02.2017 FR 1750886
(43) Date de publication de la demande: 11.12.2019
(73) Titulaire: PSA Automobiles SA, 78300 Poissy (FR)
(72) Inventeur: THIEBAULT, Ludovic, 70400 Couthenans (FR)
(86) Numéro de dépôt international: PCT/FR2018/050124
(87) Numéro de publication internationale: WO 2018/142042

(56) Documents cités:
- EP-A1- 2 457 761
- WO-A1-2015/129348
- DE-A1-102004 026 419
- FR-A1- 2 553 826

## Description

L'invention se situe dans le domaine des dispositifs de régulation d'un flux d'air et concerne plus particulièrement des dispositifs de régulation d'un flux d'air circulant sous le capot d'un véhicule. L'invention concerne également un véhicule munit de tels dispositifs de régulation d'un flux d'air.

La façade avant d'un véhicule automobile est aménagée pour autoriser l'entrée d'un flux d'air permettant de réguler la température du compartiment moteur du véhicule. Il est en partie destiné à former le fluide primaire d'un échangeur thermique logé dans ce compartiment moteur, tel qu'un radiateur de circuit de refroidissement de moteur ou de circuit de refroidissement d'air de suralimentation, ou encore un condensateur de circuit de climatisation de l'habitacle.

L'autre partie du flux d'air contourne l'échangeur thermique et atteint les éléments du véhicule placés sous le capot en traversant une ou plusieurs fenêtres ménagées dans la poutre supérieure de pare-chocs. Cette partie du flux d'air est destinée à refroidir les éléments positionnés autour du moteur comme des composants électroniques, des tuyaux, etc.

Il est connu de l'art de nombreux dispositifs permettant de réguler l'entrée d'air sous le capot. Par exemple le document US 6192838 présente un ensemble de conduits et de volets adaptés pour autoriser et/ou dévier un flux d'air entrant en fonction des besoins de régulation de la température du moteur et des éléments positionnés autour. Le document EP 0535255 décrit entre autre un dispositif de régulation du flux d'air frais sous le capot grâce à un volet autorisant ou interdisant le passage dudit flux d'air. Ce dispositif permet de rapidement chauffer un compartiment moteur froid en fermant ledit volet. En outre, l'ouverture ou la fermeture du volet est déterminée en fonction de la température du compartiment moteur, de la température du moteur lui-même et de la température extérieure. Un autre dispositif de régulation d'un flux d'air est connu du document WO 2015/129348 A1.

De tels dispositifs de régulation de l'entrée d'un flux d'air sous le capot sont cependant complexes, couteux en production et en étude d'implantation, et difficilement adaptables à tout type de véhicule. Il y a donc un besoin de systèmes moins complexes qui soient facilement adaptables d'un véhicule à l'autre.

Par ailleurs, la chaleur dégagée par la combustion produite par le moteur d'un véhicule s'évacue sous forme d'un flux d'air chaud qui peut être redirigé sous le capot par les ouvertures de la poutre supérieure de pare-chocs. Lorsque le véhicule roule, ce flux d'air chaud se mélange au flux d'air entrant par la façade avant, ce qui entraine une diminution de sa température. Cependant, lorsque le véhicule est à l'arrêt et que le moteur continue de tourner, ce flux d'air chaud est redirigé sous le capot sans être mélangé à un flux d'air extérieur, entrainant alors une surchauffe des éléments présents sous le capot.

Il y a donc un besoin de limiter voire d'empêcher cette redirection sous le capot d'un flux d'air chaud en provenance du compartiment moteur lorsque le véhicule est à l'arrêt et que le moteur continue de tourner. Il existe également un besoin d'une solution simple, peu coûteuse et facile à implanter.

L'invention a pour objectif de répondre à au moins un des problèmes antérieurs en proposant un nouveau dispositif de régulation du flux d'air circulant sous le capot du véhicule qui est d'implantation facile, et qui est non motorisé.

A cet effet, l'invention a pour objet un véhicule automobile comprenant une poutre supérieure de pare-chocs avant, ladite poutre supérieure comprenant au moins une ouverture destinée à laisser passer sous le capot un flux d'air provenant de l'avant du véhicule, le véhicule comprenant en outre au moins un dispositif de régulation de l'entrée dudit flux d'air, le véhicule étant remarquable en ce que le ou les dispositifs de régulation comprennent chacun un support formant un conduit orienté selon l'axe longitudinal du véhicule et positionné en avant de la poutre supérieure de pare-chocs de sorte à déboucher sur la ou sur au moins une desdites ouvertures, et un volet mobile entre une position d'ouverture et une position d'obstruction dudit conduit.

Comme on l'aura compris à la lecture de la définition qui vient d'en être donnée, l'invention propose selon un premier aspect de positionner le dispositif de régulation en avant de la poutre supérieure de pare-chocs, à savoir dans un espace qui est généralement laissé vide dans les véhicules automobiles. Cet aspect rend le dispositif de l'invention adapté à tous types de véhicule et à tous types de motorisation du véhicule au sein d'une même série de véhicule sans nécessiter une adaptation particulière de l'architecture interne du véhicule.

Selon un mode de réalisation de l'invention, ledit volet est mobile par pivotement autour d'un axe parallèle à un de ses bords.

Selon un mode réalisation, le volet comprend un bord supérieur et un bord inférieur, et l'axe de pivotement du volet est horizontal. De préférence le volet pivote par rotation autour de son bord supérieur. De préférence encore, la position d'obstruction du volet est une position verticale.

Selon un mode particulier de réalisation de l'invention, le volet est pourvu de moyens élastiques le ramenant depuis sa position d'ouverture à sa position d'obstruction en l'absence de flux d'air entrant par l'avant du véhicule.

Selon un second aspect, l'invention propose des moyens passifs de régulation de l'entrée d'un flux d'air sous le capot en ce que le volet est mobile entre ses positions d'ouverture et d'obstruction par la poussée générée par un flux d'air en provenance de l'extérieur du véhicule et non pas par des moyens motorisés. Ainsi le volet du dispositif selon l'invention va s'ouvrir uniquement lorsque le véhicule est en roulage ou lorsqu'il y a du vent, c'est-à-dire lorsque le flux d'air dirigé sous le capot n'est pas uniquement constitué d'un flux d'air chaud en provenance de l'échangeur thermique. En effet, lorsque le véhicule est en mouvement, le volet est poussé par le flux d'air entrant par l'avant du véhicule et bascule en arrière en direction de l'ouverture ou d'au moins une des ouvertures de la poutre supérieure de pare-chocs, laissant passer ledit flux d'air. Lorsque le véhicule est à l'arrêt, ledit flux d'air n'exerce plus de pression sur le volet, et ce dernier revient en position d'obstruction par des moyens élastiques de rappel ou par simple gravité, bloquant tout ou partie du passage de flux d'air chaud s'échappant du moteur. Les flux d'air chaud s'échappant du moteur n'ont en effet pas la force nécessaire pour pousser et faire pivoter le volet.

Selon un autre mode particulier de réalisation de l'invention, le support est au contact ou à proximité de la poutre supérieure de pare-chocs.

Selon un mode particulier de réalisation préférée de l'invention, le véhicule comprend une armature de pare-chocs s'étendant en avant du véhicule et montée sur la poutre supérieure de pare-chocs, et le support est fixé à l'armature de pare-chocs.

De préférence, le support est un profilé en forme de U ouvert vers le haut et forme un conduit avec l'armature de pare-chocs. Le support coopère avec l'armature de pare-chocs pour former un conduit.

De préférence encore, le support est fixé à l'armature de pare-chocs par au moins un pion de clippage s'enfichant dans un ou plusieurs ajourages présentés par l'armature de pare-chocs. Selon un autre mode particulier de réalisation préférée de l'invention, le support comprend une face arrière tournée vers la poutre supérieure de pare-chocs et est fixé à la poutre supérieure de pare-chocs par ladite face arrière.

Selon un mode particulier de réalisation de l'invention, le volet comprend une lèvre périphérique souple sur au moins un de ses bords, de préférence sur l'intégralité de son périmètre. De préférence, le support comprend une lèvre périphérique souple sur au moins une partie de son bord positionné en regard de la poutre supérieure de pare-chocs.

Selon cet aspect de l'invention, le volet assure une meilleure obstruction d'un passage de flux d'air lorsque le véhicule est à l'arrêt, en proposant un dispositif montrant une certaine étanchéité.

Selon un mode particulier de réalisation, le volet comprend une surépaisseur de matière formant un poids au niveau de son bord le plus éloigné de l'axe autour duquel il s'articule. Par exemple, le volet comprend une surépaisseur de matière formant un poids au niveau de son bord inférieur. Ainsi, le déplacement du volet en position d'obstruction est facilité par l'ajout de matière et donc de poids au niveau de sa partie inférieure et assure une meilleure obstruction de la ou des ouvertures de la poutre supérieure de pare-chocs.

De préférence ladite surépaisseur est en matière ferromagnétique et le support comprend au moins un aimant disposé de sorte à ce que lorsque le volet est dans sa position d'obstruction la surépaisseur du volet soit à proximité ou au contact du ou d'au moins un aimant du support et qu'ils s'attirent entre eux. Selon cet aspect de l'invention, la mise en position correcte du volet lors de son placement en position d'obstruction est améliorée, assurant une meilleure obstruction de la ou des ouvertures de la poutre supérieure de pare-chocs. Cette variante est utilisable sur tous les types de volets selon l'invention que ces volets pivotent selon un axe horizontal ou vertical.

Selon un mode particulier de réalisation de l'invention, le support comprend au moins une butée positionnée au contact d'au moins un des bords du volet lorsque ce dernier est en position d'obturation.

De préférence, la ou les butées sont au contact du bord du volet le plus éloigné de son axe de rotation et/ou comprennent des aimants. Ainsi, le volet ne risque pas de dépasser sa position d'obturation lors de son retour depuis sa position d'ouverture.

L'invention sera bien comprise et d'autres aspects et avantages apparaîtront clairement à la lecture de la description qui suit, donnée à titre d'exemple en référence aux planches de dessins annexées sur lesquelles :
- La figure 1 représente un dispositif de régulation selon l'invention placé dans un compartiment moteur d'un véhicule et dont le volet est en position d'obstruction.
- La figure 2 représente le dispositif de régulation de la figure 1 mais dont le volet est en position d'ouverture.
- La figure 3 est une vue en perspective d'un dispositif de régulation selon l'invention.

Dans la description qui suit, le terme « comprendre » est synonyme de « inclure » et n'est pas limitatif en ce qu'il autorise la présence d'autres éléments dans le dispositif de régulation ou le véhicule auquel il se rapporte. Il est entendu que le terme « comprendre » inclut les termes « consister en ». Les termes « avant » et « arrière » ainsi que les directions « longitudinale » et « transversale » s'entendront par rapport à l'orientation générale du véhicule. Les termes « bas » et « inférieur » indiqueront une proximité avec le sol plus importante que les termes « haut » et « supérieur » respectivement. Sur les différentes figures, les mêmes références désignent des éléments identiques ou similaires.

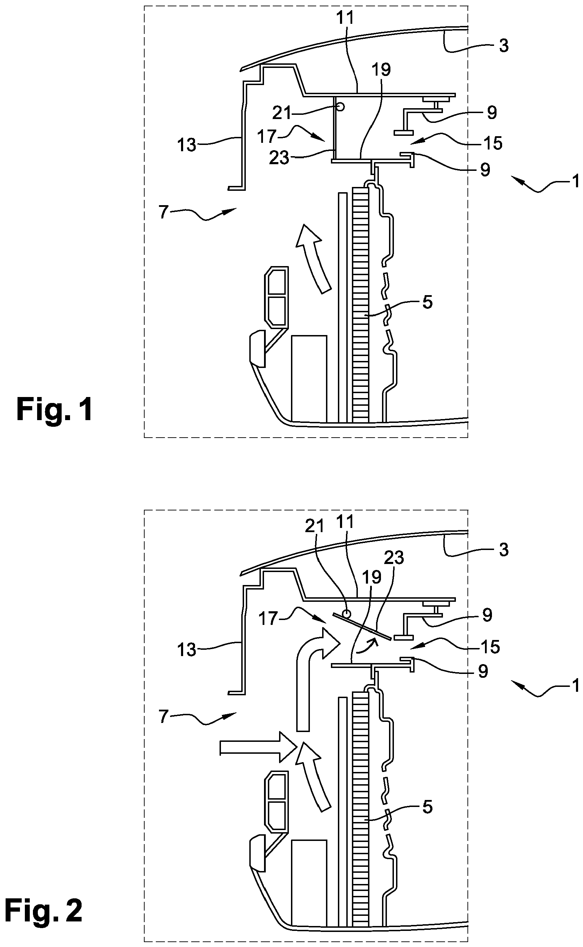

On se référera en premier lieu à la figure 1 qui représente un dispositif de régulation selon l'invention placé dans un véhicule. Le compartiment moteur 1 est fermé dans sa partie supérieure par un capot 3 qui s'étend jusqu'à la façade avant du véhicule. Dans ce compartiment moteur 1, et en arrière de la façade avant, se trouve un système de refroidissement du moteur comprenant notamment un échangeur thermique représenté sur cette figure par un radiateur 5. Une ouverture 7 est ménagée dans la façade avant permettant une entrée d'air depuis l'extérieur du véhicule en direction du radiateur 5 et du dispositif selon l'invention comme nous le verrons plus loin. Le véhicule présente également une poutre supérieure 9 de pare-chocs disposée au-dessus du radiateur 5 et sur laquelle est montée une armature de pare-chocs 11 s'étendant vers l'avant du véhicule. Cette armature de pare-chocs 11 soutient un pare-chocs 13 formant la façade avant du véhicule. La poutre supérieure de pare-chocs 9 comprend au moins une ouverture 15 débouchant sur le compartiment moteur 1, et donc sur les éléments du moteur placés sous le capot 3 et positionnés en arrière de ladite poutre supérieure 9.

Lorsque le véhicule est en mouvement, comme représenté sur la figure 2, un flux d'air en provenance de l'extérieur s'engouffre par la façade avant du véhicule. Ce flux d'air vient coopérer avec le radiateur 5 et peut atteindre les éléments placés sous le capot 3 au travers de la ou des ouvertures 15 de la poutre supérieure 9 de pare-chocs. Le véhicule selon l'invention est remarquable en ce qu'il comprend au moins un dispositif de régulation 17 de l'entrée du flux d'air passant au travers de la ou d'au moins une desdites ouvertures de la poutre supérieure 9 de pare-chocs. Selon l'invention, le ou les dispositifs de régulation 17 comprennent chacun un support 19 formant un conduit orienté selon l'axe longitudinal du véhicule et positionné en avant de la poutre supérieure 9 de pare-chocs de sorte à déboucher sur la ou au moins une desdites ouvertures 15, et un volet 23 mobile entre une position d'ouverture du conduit et une position d'obstruction de ce conduit.

Avantageusement, ledit volet 23 est mobile par pivotement autour d'un axe 21 parallèle à un de ses bords. L'axe 21 de pivotement peut être vertical ou horizontal, il est préférentiellement horizontal. Le volet 23 comprend un bord supérieur et un bord inférieur et lorsque l'axe 21 de pivotement est horizontal, le volet 23 pivotera préférentiellement par rotation autour de son bord supérieur.

La figure 1 représente le dispositif de régulation 17 de l'invention lorsque le volet 23 est en position d'obstruction. Le volet 23 se place verticalement du fait de la gravité, avec son bord le plus éloigné de l'axe 21 autour duquel le volet 23 est articulé (dénommé ci-après « bord distal ») positionné en bas. Ainsi, lorsque le véhicule prend de la vitesse et qu'un flux d'air est créé, le volet 23 va être poussé par ce flux d'air et basculer en arrière pour se retrouver dans sa position d'ouverture, représentés en figure 2.

Lorsque le volet 23 est en position d'ouverture, il présente une position inclinée ou horizontale. Bien entendu la hauteur du volet 23 est adaptée pour permettre un basculement suffisant de ce dernier afin de laisser passer un flux d'air suffisant et préférentiellement sans risquer de percuter la poutre supérieure de pare-chocs se trouvant derrière. Lorsque le véhicule sera à nouveau à l'arrêt, le volet 23 retournera en position d'obturation tout seul, par basculement inverse grâce à la gravité.

Selon un mode de réalisation de l'invention non représenté, le volet est pourvu de moyens élastiques le ramenant depuis sa position d'ouverture à sa position d'obstruction en l'absence de flux d'air entrant. De préférence, les moyens élastiques comprennent un ressort. L'homme du métier aura intérêt à mettre en place ce mode de réalisation lorsque l'axe d'articulation du volet est en position vertical, ou lorsque l'axe d'articulation du volet est en position horizontale mais que le volet s'articule par son bord inférieur.

Selon un mode de réalisation préféré de l'invention, le support 19 est fixé à l'armature de pare-chocs 11. De préférence, le support 19 est un profilé en forme de U ouvert vers le haut, comme représenté sur la figure 2, et forme avec l'armature 11 de pare-chocs un conduit. Le profilé est alors fermé en partie supérieure par ladite armature. Il y a ainsi un gain de matière, permettant une diminution des coûts de fabrication. Selon un autre mode de réalisation le support est un profilé formant lui-même un conduit, par exemple le support se présente sous forme d'un tuyau. Alternativement ou de manière complémentaire, le support est fixé par sa face arrière à la poutre supérieure de pare-chocs.

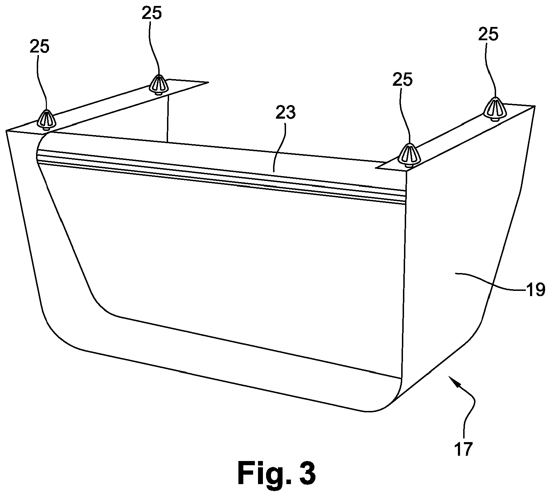

Selon un mode de réalisation préféré de l'invention, la fixation du support 19 à l'armature de pare-chocs 11 est réalisée grâce à au moins un pion de clippage 25, tel que représenté sur la figure 3. Ce ou ces pions de clippage 25 sont fixés à un ou plusieurs ajourages (non représentés) présentés par l'armature de pare-chocs 11. De préférence, le support 19 est fixé par quatre pions de clippage 25 à l'armature de pare-chocs 11.

Selon un autre mode de réalisation de l'invention non représenté, le volet comprend une lèvre périphérique sur au moins un de ses bords, de préférence la lèvre s'étend sur la totalité de son pourtour. De préférence la lèvre périphérique est une lèvre d'étanchéité formée dans un matériau plus souple que le reste du volet. Par exemple, la lèvre périphérique est formée en un matériau plastique présentant des propriétés élastiques, de préférence un élastomère choisi parmi un terpolymère d'éthylène de propylène et d'un diène (EPDM), un élastomère thermoplastique (TPE) ou un latex.

Selon un autre mode de réalisation non représenté, le volet présente des moyens passifs facilitant son retour en position d'obturation. A cet effet le volet peut par exemple présenter une surépaisseur de matière au niveau de son bord distal inférieur formant un poids, ce dernier étant alors plus lourd que le bord supérieur proche de l'axe d'articulation. Lorsque le volet se déplace depuis sa position d'ouverture vers sa position d'obturation, son basculement est favorisé. Cette surépaisseur peut être soit venue de matière avec le volet ou dans une matière différente. Bien entendu l'homme du métier aura intérêt à mettre en place ce mode de réalisation lorsque l'axe de pivotement est horizontal et en ce que le volet pivote par rotation autour de son bord supérieur.

Selon un autre mode de réalisation non représenté, le dispositif de régulation est adapté pour permettre une bonne mise en position d'obturation. A cet effet, la surépaisseur du volet est formée en matière ferromagnétique, et le support comprend au moins un aimant disposé de sorte à ce que lorsque le volet est dans sa position d'obstruction la surépaisseur du volet soit à proximité ou au contact du ou d'au moins un aimant du support et qu'ils s'attirent entre eux. La surépaisseur peut être formée par exemple par du fer ou de l'acier. Une telle surépaisseur présente une double fonction de facilitation du retour en position d'obturation du volet et de sa bonne mise en position d'obturation.

Selon un mode de réalisation non représenté, le support est adapté pour que lors du retour du volet en position d'obturation depuis sa position d'ouverture, ce dernier ne dépasse pas dans son élan sa position d'obturation. A cet effet le support peut comprendre au moins une butée au contact d'au moins un des bords du volet lorsque ce dernier est en position d'obturation. Lorsque la butée est au contact des bords latéraux et/ou un bord distal du volet, cette dernière sera positionnée en avant du volet. Lorsque la butée est au contact du bord proximal du volet, proche de son axe de rotation, cette dernière sera positionnée en arrière. De préférence, la ou les butés peuvent comprendre des aimants. Ainsi, ces butées remplissent une double fonction d'empêchement du volet de dépasser sa position d'obturation et de bonne mise en position d'obturation. Alternativement, le support peut comprendre un renflement au contact d'au moins un des bords latéraux et/ou du bord distal du volet lorsque ce dernier est en position d'obturation.

## Revendications

1. Véhicule automobile comprenant une poutre supérieure (9) de pare-chocs avant, ladite poutre supérieure (9) comprenant au moins une ouverture (15) destinée à laisser passer sous le capot (3) un flux d'air provenant de l'avant du véhicule, le véhicule comprenant en outre au moins un dispositif de régulation (17) de l'entrée dudit flux d'air, le véhicule étant **caractérisé en ce que** le ou les dispositifs de régulation (17) comprennent chacun un support (19) formant un conduit orienté selon l'axe longitudinal du véhicule et positionné en avant de la poutre supérieure (9) de pare-chocs de sorte à déboucher sur la ou sur au moins une desdites ouvertures (15), et un volet (23) mobile entre une position d'ouverture et une position d'obstruction dudit conduit.

2. Véhicule automobile selon la revendication 1, **caractérisé en ce que** ledit volet (23) est mobile par pivotement autour d'un axe (21) parallèle à un de ses bords.

3. Véhicule automobile selon la revendication 2, le volet (23) comprenant un bord supérieur et un bord inférieur, le véhicule étant **caractérisé en ce que** l'axe (21) de pivotement du volet est horizontal, de préférence le volet (23) pivote par rotation autour de son bord supérieur.

4. Véhicule automobile selon la revendication 3, **caractérisé en ce que** le volet (23) pivote par rotation autour de son bord supérieur et comprend une surépaisseur de matière formant un poids au niveau de son bord inférieur, de préférence ladite surépaisseur est en matière ferromagnétique et le support comprend au moins un aimant disposé de sorte à ce que lorsque le volet est dans sa position d'obstruction la surépaisseur du volet soit à proximité ou au contact du ou d'au moins un aimant du support et qu'ils s'attirent entre eux.

5. Véhicule automobile selon l'une des revendications 1 à 4, le véhicule comprenant une armature de pare-chocs (11) s'étendant en avant du véhicule et montée sur la poutre supérieure (9) de pare-chocs, le véhicule est **caractérisé en ce que** le support (19) est fixé à l'armature de pare-chocs (11).

6. Véhicule automobile selon la revendication 5, **caractérisé en ce que** le support (19) est un profilé en forme de U ouvert vers le haut et forme un conduit avec l'armature de pare-chocs (11).

7. Véhicule automobile selon la revendication 5 ou 6, **caractérisé en ce que** le support (19) est fixé à l'armature de pare-chocs (11) par au moins un pion de clippage (25) s'enfichant dans un ou plusieurs ajourages présentés par l'armature de pare-chocs (11).

8. Véhicule automobile selon l'une des revendications 1 à 7, **caractérisé en ce que** le volet comprend une lèvre périphérique souple sur au moins un de ses bords, et de préférence le support comprend une lèvre périphérique souple sur au moins une partie de son bord positionné en regard de la poutre supérieure de pare-chocs.

9. Véhicule automobile selon l'une des revendications 1 à 8, **caractérisé en ce que** le support comprend au moins une butée positionnée au contact d'au moins un des bords du volet lorsque ce dernier est en position d'obturation.

## Patentansprüche

1. Kraftfahrzeug mit einem oberen vorderen Stoßfängerbalken (9), wobei der obere Balken (9) mindestens eine Öffnung (15) aufweist, um einen Luftstrom von der Vorderseite des Fahrzeugs unter die Abdeckung (3) zu leiten, wobei das Fahrzeug ferner mindestens eine Einrichtung (17) zur Regelung des Eintritts des Luftstroms aufweist, wobei das Fahrzeug **dadurch gekennzeichnet ist, dass** die Regeleinrichtung (17) jeweils einen Träger (19) aufweist einen Kanal bilden, der entlang der Fahrzeuglängsachse ausgerichtet und vor dem oberen Stoßfängerträger (9) so positioniert ist, dass er in die oder an mindestens eine der Öffnungen (15) mündet, und eine Klappe (23) bilden, die zwischen einer Öffnungsstellung und einer Verstopfungsstellung des Kanals bewegbar ist.

2. Kraftfahrzeug nach Anspruch 1, **dadurch gekennzeichnet, dass** die Klappe (23) um eine Achse (21) schwenkbar ist, die parallel zu einer ihrer Kanten verläuft.

3. Kraftfahrzeug nach Anspruch 2, wobei die Klappe (23) eine Oberkante und eine Unterkante aufweist, wobei das Fahrzeug **dadurch gekennzeichnet ist, dass** die Schwenkachse (21) der Klappe horizontal ist, vorzugsweise die Klappe (23) um ihre Oberkante gedreht wird.

4. Kraftfahrzeug nach Anspruch 3, **dadurch gekennzeichnet, dass** die Klappe (23) um ihre obere Kante drehbar gelagert ist und eine Materialverdickung aufweist, die an ihrer unteren Kante ein Gewicht bildet, vorzugsweise die Verdickung aus ferromagnetischem Material besteht, und der Träger mindestens einen Magneten aufweist, der so angeordnet ist, dass, wenn sich die Klappe in ihrer Verstopfungsposition befindet, die Dicke der Klappe nahe oder in Kontakt mit dem oder mindestens einem Magneten ist und sich gegenseitig anziehen.

5. Kraftfahrzeug nach einem der Ansprüche 1 bis 4, wobei das Fahrzeug einen Stoßfängeranker (11) aufweist, der sich vor dem Fahrzeug erstreckt und am oberen Stoßfängerträger (9) montiert ist, **dadurch gekennzeichnet, dass** der Träger (19) an dem Stoßfängeranker (11) befestigt ist.

6. Kraftfahrzeug nach Anspruch 5, **dadurch gekennzeichnet, dass** der Träger (19) ein nach oben offenes U-förmiges Profil ist und mit dem Stoßfängeranker (11) eine Leitung bildet.

7. Kraftfahrzeug nach Anspruch 5 oder 6, **dadurch gekennzeichnet, dass** der Träger (19) an der Stoßfängerbewehrung (11) durch mindestens einen in eine oder mehrere Durchbrüche der Stoßfängerbewehrung (11) einsteckenden Clipstift (25) befestigt ist.

8. Kraftfahrzeug nach einem der Ansprüche 1 bis 7, **dadurch gekennzeichnet, dass** die Klappe an mindestens einem ihrer Ränder eine flexible Umfangslippe aufweist, und vorzugsweise der Träger an mindestens einem Teil ihrer Kante, der dem oberen Stoßfängerträger gegenüberliegt, eine flexible Umfangslippe aufweist.

9. Kraftfahrzeug nach einem der Ansprüche 1 bis 8, **dadurch gekennzeichnet, dass** der Träger mindestens einen Anschlag aufweist, der in Kontakt mit mindestens einem der Ränder der Klappe angeordnet ist, wenn sich diese in Schließstellung befindet.

## Claims

1. Motor vehicle consisting of a front bumper top beam (9), such top beam (9) having at least one opening (15) which is designed to allow an air flow from the front of the vehicle to pass under the cover (3), and the vehicle also having at least one control device (17) of the entry of that air flow, the vehicle being characterized as the control device(s) (1) 7) each comprises a bracket (19) which forms a duct oriented according to the longitudinal axis of the vehicle and positioned in the front of the upper bumper beam (9) so as to lead to at least one of the openings (15), and a movable (23) panel between an opening position and an obstruction position of that duct.

2. Motor vehicle according to claim 1, **characterized in that** the said part (23) is rotated around an axis (21) parallel to one of its edges.

3. Motor vehicle according to claim 2, with panel (23) having a top and bottom edge, the vehicle being characterized that the axis (21) of the panel is horizontal, preferably panel (23) rotates around its top edge.

4. Motor vehicle according to claim 3, which is characterized that the part (23) rotates around its top edge and includes a material overthickness that is a weight at its bottom edge, preferably that overthickness is ferromagnetic and the bracket includes at least one magnet that is laid out so that when the part is in its obstructive position the thickness of the part is close to or in contact with or at least a magnet for support and they attract each other.

5. Motor vehicle in accordance with one of claims 1 to 4, since the vehicle includes a bumper frame (11) extending forward from the vehicle and mounted on the upper bumper (9) beam, the vehicle is **characterized in that** the bracket (19) is attached to the bumper frame (11).

6. Motor vehicle according to claim 5, characterized as the bracket (19) is a U-shaped profile open up and forms a conduit with the bumper frame (11).

7. Motor vehicle according to claim 5 or 6, which is characterized that the bracket (19) is attached to the bumper frame (11) by at least one piece of clipboard (25) plugging into one or more pieces of equipment presented by the bumper frame (11).

8. Motor vehicle according to one of the claims 1 to 7, characterized that the panel includes a soft peripheral lip on at least one of its edges, and preferably the bracket includes a soft peripheral lip on at least part of its edge positioned next to the upper bumper beam.

9. Motor vehicle in accordance with one of the claims 1 to 8, which is characterized that the carrier includes at least one stop positioned in contact with at least one edge of the panel when the panel is in the shutter position.
